# EUROPÄISCHE PATENTSCHRIFT

(11) **EP 2 959 564 B1**
(45) Veröffentlichungstag und Bekanntmachung des Hinweises auf die Patenterteilung: **16.05.2018**
(21) Anmeldenummer: 14706553.6
(22) Anmeldetag: 24.02.2014
(51) Int. Cl.: H02K 3/28, H02K 3/46, H02K 3/52, H02K 5/22

(54) **ELEKTROMOTOR, INSBESONDERE EINER FAHRZEUGKOMPONENTE**
ELECTRIC MOTOR, IN PARTICULAR OF A VEHICLE COMPONENT
MOTEUR ÉLECTRIQUE, NOTAMMENT D'UN COMPOSANT DE VÉHICULE

(30) Priorität: 22.02.2013 DE 102013003024
(43) Veröffentlichungstag der Anmeldung: 30.12.2015
(73) Patentinhaber: Brose Fahrzeugteile GmbH & Co. Kommanditgesellschaft, Würzburg, 97076 Würzburg (DE)
(72) Erfinder: KNOPF, Maximilian, 81673 München (DE); KESSLER, Bernhard, 97705 Burkardroth (DE); SCHUMPA, Christian, 97320 Großlangheim (DE)
(74) Vertreter: FDST Patentanwälte
(86) Internationale Anmeldenummer: PCT/EP2014/053494
(87) Internationale Veröffentlichungsnummer: WO 2014/128287

(56) Entgegenhaltungen:
- EP-A1- 1 727 261
- DE-A1- 10 261 611
- DE-A1- 10 318 816
- JP-A- 2007 159 192

## Beschreibung

Die Erfindung betrifft einen Elektromotor, insbesondere einer Fahrzeugkomponente, beispielsweise eines Fensterheber- oder Sitzverstellantriebs, mit einem Rotor und mit einem Stator mit einer dreiphasigen Statorwicklung mit je Phase mindestens einer Spule (Spulenwicklung) sowie mit einem Verschaltungselement, gemäß dem Oberbegriff des Anspruchs 1. Ein Elektromotor mit einem derartigen Verschaltungselement ist aus der DE 103 18 816 A1 und aus der DE 102 61 611 A1 bekannt.

Aus der DE 10 2009 036 128 A1 ist ein Elektromotor mit einem Stator mit zwölf Statorwicklungen bekannt, die teilweise in Reihe und letztendlich zu einer Sternschaltung verschaltet sind. Zur Verschaltung sind ein Tragelement und eine Leiterbahnstruktur aus vier Drähten vorgesehen, die von dem Tragelement aufgenommen sind, indem die Drähte in dieses Tragelement eingeklipst sind. Die Drähte bilden einen vollständigen Ring oder teilweise Ringabschnitte, wobei ein solcher Draht als vollständiger Ring im Zusammenhang mit den Spulenenden der Statorwicklungen die Sternschaltung ausbildet. Für eine axiale Führung der Spulenenden weist das Tragelement axiale Führungen auf. Eine endgültige elektrische Verbindung zwischen den Spulenenden und den jeweiligen Drähten erfolgt durch Löten, Schweißen oder Heißverstemmen.

Die US 2011/ 0057524 A1 offenbart eine elektrische Steckverbinderanordnung für einen bürstenlosen elektromagnetischen Motor. Dieser umfasst eine dreiphasige Statorwicklung mit einer Anzahl von Wicklungen pro Phase, welche entweder parallel oder in Reihe verschaltet sind. Die Steckverbinderanordnung umfasst ein ringförmiges Drahtleitelement zur Aufnahme der Enden der Wicklungen sowie eine Verbindungsaufnahme in Form von drei ringförmigen Verbindungsschienen, die jeweils als Endung einen Kabelschuh aufweisen. Außerdem weisen die Verbin dungsschienen axial erweiterte Drahtklemmen zur Sicherstellung des elektrischen Kontaktes für die drei Phasen durch die Schlitze des Drahtleitelementes auf.

Aus der US 2005/ 0088049 A1 ist ein Stator für einen elektrischen Motor mit ringförmigem Statorpaket mit mehreren Statorzähnen bekannt. Eine ringförmige Verbindungseinheit ist an einer End- oder Stirnseite des Stators angebracht. Die ringförmige Verbindungseinheit umfasst Ablenkungselemente sowie ein Tragelement, welches mit einer Aufnahme und Schlitzen ausgestattet ist. In der Aufnahme befinden sich eine Reihe von gegeneinander isolierten Verbindungsringen, deren jeder Kontaktelemente aufweist, welche durch die Schlitze nach außen geführt sind.
Die DE 10 2007 040 809 A1 offenbart einen Drehstrommotor mit mehreren, parallel geschaltete Spulen aufweisenden Strängen eines Stators. Der Stator weist ringförmig gestaltete Kontaktschienen zur Kontaktierung der Spulen auf, die ihrerseits mit nutförmigen Kontakthaltern als bauliche Einheit gestaltet sind. Die Kontakthalter sind aus Kunststoff gefertigt und an den Spulen angespritzt. Die Druchschrift DE10318816 wird von den o.g. Druckschriften als nächstliegender Stand der Technik angesehen und offenbart die Merkmale der Präambel des unabhängigen Anspruchs 1. Der Erfindung liegt die Aufgabe zu Grunde, eine möglichst einfache Verschaltung der Stator- oder Phasenwicklungen eines Elektromotors bereitzustellen, welche mit möglichst geringem Aufwand, d. h. mit einer möglichst minimierten Anzahl von Schienen oder Kontaktringen oder von zusätzlichen Arbeitsschritten, wie Löten, Schweißen oder Heißverstemmen von Drähten und Spulenenden der Phasenwicklungen, erzeugt werden kann.
Diese Aufgabe wird erfindungsgemäß gelöst durch die Merkmale des Anspruches 1. Vorteilhafte Ausgestaltungen sind in den Unteransprüchen angegeben.
Erfindungsgemäß weist der Elektromotor der eingangs genannten Art ein Verschaltungselement mit einer der Anzahl von Spulenenden entsprechenden Anzahl von Kontaktdurchführungen auf. Das Verschaltungselement ist zweckmäßigerweise ring- oder kreisringförmig und hierbei geeigneterweise an den Durchmesser des Stators derart angepasst, das es an einer Stirnseite des Stators angeordnet und dort fixiert werden kann.

Jeweils ein Spulenende ist mit den entsprechenden Spulenenden der beiden anderen Phasen unter Bildung eines Sternpunktes mittels eines Kontaktringes verbunden, der dem Verschaltungselement zugeordnet ist und zweckmäßigerweise in diesem einliegt.
Hierzu bildet eine erste Kontaktierungsgruppe eine erste Anzahl von Kontaktdurchführungen, denen insbesondere unter Sternpunktbildung zur elektrisch leitenden Verbindung der ersten Spulenenden jeweils eine Kontaktstelle des Kontaktrings zugeordnet ist.
Das jeweils andere (zweite) Spulenende ist verdrahtungstechnisch zur elektrischen Anschlusskontaktierung mit einer Steuerelektronik an einer exponierten Stelle aus dem Verschaltungselement herausgeführt. Hierzu bildet eine zweite Kontaktierungsgruppe eine zweite Anzahl von Kontaktdurchführungen aus, über welche die zweiten Spulenenden hindurch geführt sind. Die zweiten Spulenenden bilden hierzu Spulenendenabschnitte aus, die entlang des Verschaltungselements azimutal geführt sind, d. h. außenumfangsseitig an oder in diesem verlaufen. Die Spulenendenabschnitte sind unter Bereitstellung eines dreiphasigen Wicklungsanschlusses an exponierten Positionen axial aus dem Verschaltungselement herausgeführt. Das Verschaltungselement ist kreisringförmig ausgebildet.
Alternativ können den Kontaktdurchführungen der zweiten Kontaktierungsgruppe separate Leiterelemente zur elektrisch leitenden Verbindung mit den zweiten Spulenenden zugeordnet sein. Bei dieser zweiten Variante bilden die Leiterelemente jeweils zwischen einem Anschlussende und einem Kontaktende einen Leiterabschnitt, der entlang des Verschaltungselements azimutal geführt ist. Zur Bereitstellung des dreiphasigen Wicklungsanschlusses sind dann die Anschlussenden der Leiterelemente an den exponierten Positionen, insbesondere wiederum axial, aus dem Verschaltungselement herausgeführt. Das kreisringförmige Verschaltungselement bildet bei dieser zweiten Variante einen Adapter.

Bei beiden Varianten dient das Verschaltungselement zur anschlusssicheren Kontaktierung der üblicherweise vergleichsweise großen Anzahl der Spulenenden der Statorwicklung mit einem dreiphasigen Anschluss einer Steuerschaltung oderelektronik, wobei das Verschaltungselement bereits die phasenrichtige Verschaltung der Spulen der Statorwicklung in Sternschaltung enthält. Das Verschaltungselement kann somit als separates Bauteil gefertigt und zur besonders einfach handhabbaren Montage mit dem die Statorwicklung tragenden Stator des Elektromotors bei zusätzlich zuverlässiger und fehlersicherer Kontaktierung und Verschaltung der Spulen der Statorwicklung bereitgestellt werden. Dadurch ist eine einfache und zuverlässig montier- oder herstellbare Anschlusskontaktierung mit einer, insbesondere von einem Fahrzeugbordnetz versorgten, Elektronik und/oder einer Strom- oder Spannungsquelle gegeben, wobei die dreiphasigen Anschlussenden bereits optimal positioniert werden können.
In einer vorteilhaften Ausgestaltung sind die Wicklungsanschlüsse an exponierten Steiien-bezogen auf die Motorachse-in axialer Richtung des Verschaltungselementes gehalten. Hierzu weist das Verschaltungselement eine entsprechende Anzahl von Halteelemente auf, welche die Wicklungsanschlüsse bzw. die Anschlussenden der Leiter- oder Spulenendenabschnitte an den exponierten Stellen vorzugsweise axial ausgerichtet halten. Die an das Verschaltungselement angeformten Haltelemente bilden quasi die Übergangsstelle zwischen dem Leiter- bzw. Spulenendenabschnitt und den Wicklungsanschlüssen. Dadurch wird für den weiteren Zusammenbau des Elektromotors eine stabile Anordnung geschaffen.
Das Verschaltungselement umfasst ein ringförmiges Rahmenteil, in dem der Kontaktring einliegt. Das Rahmenteil weist eine Umfangswandung und einen daran angeformten radialen Innenkragen auf. Die Kontaktdurchführungen sind axial verlaufend in den Rahmenkragen eingebracht, während die Azimutalnuten für die Spulenenden- bzw. Leiterabschnitte des Verschaltungselementes in der Umfangswandung außenumfangsseitig vorgesehen sind. Damit sind diese Abschnitte umfangsseitig in dem Verschaltungselement (Führungsring) geführt und können dort elektrisch isoliert gehalten werden.

Der Kontaktring ist mit ösenartig ausgebogenen Kontaktstellen ausgeführt, die zur Aufnahme und Kontaktierung der ersten Spulenenden mit den Kontaktdurchführungen der ersten Kontaktierungsgruppe fluchten.
Eine geeignete Ausführungsform des Verschaltungselements sieht radial angeordnete Rastelemente zur Befestigung des Verschaltungselements am Stator vor. Hierzu sind die Rastelemente am Rahmenteil umfangsseitig verteilt angeordnet und geeigneterweise am Innenumfang des Innenkragens angeformt. Zur Herstellung der Rastverbindung mit dem Verschaltungselement sind den Spulen statorseitige Wicklungsrahmen mit korrespondierenden Rastelementen zugeordnet.
Eine zweckmäßige Weiterbildung sieht ein Deckelelement vor, das am Verschaltungselement fixierbar, insbesondere mit diesem verrastbar, ist. Auf diese Weise können die azimutal geführten Abschnitte (Drahtabschnitte) beispielsweise vor Verschmutzung geschützt und Fehlkontaktierungen im Motorgehäuse vermieden werden.
Das Deckelelement weist geeigneterweise eine der Anzahl der Phasen entsprechende Anzahl von domartig erhabenen oder haubenartigen, Führungselementen auf. Über diese Führungselemente des Deckelelementes sind die Wicklungsanschlüsse zur Anschlusskontaktierung mit einer Steuerelektronik aus dem Verschaltungselement axial herausgeführt, wobei die Richtungsangabe wiederum auf die Motorachse bezogen ist. Dies verleiht den als Wicklungsanschlüsse dienenden oder als solche wirksamen Verdrahtungsabschnitten (Spulenenden- bzw. Leiterabschnitten) eine hohe Stabilität für eine Kontaktierung mit einer Steuerungseinheit (Elektronik) bzw. mit einer Strom- oder Spannungsquelle (Fahrzeugbatterie bzw. -bordnetz).

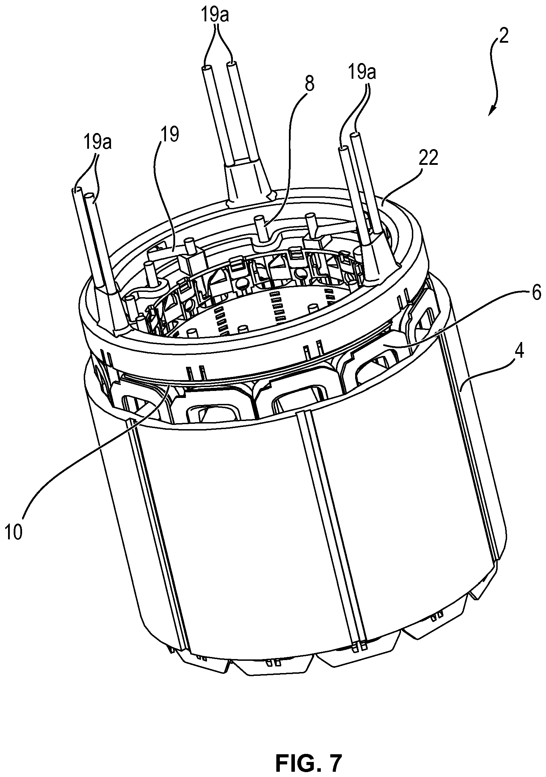

- Fig. 7: eine perspektivische Darstellung des zusammengefügten Stators mit Statorblechpaket, Wicklungsrahmen, Spulenwicklungen und Kontakt- und Verschaltelement, Statorjoch inklusive des Deckelelements des Verschaltungselementes.

Einander entsprechende Teile sind in allen Figuren mit den gleichen Bezugszeichen versehen.

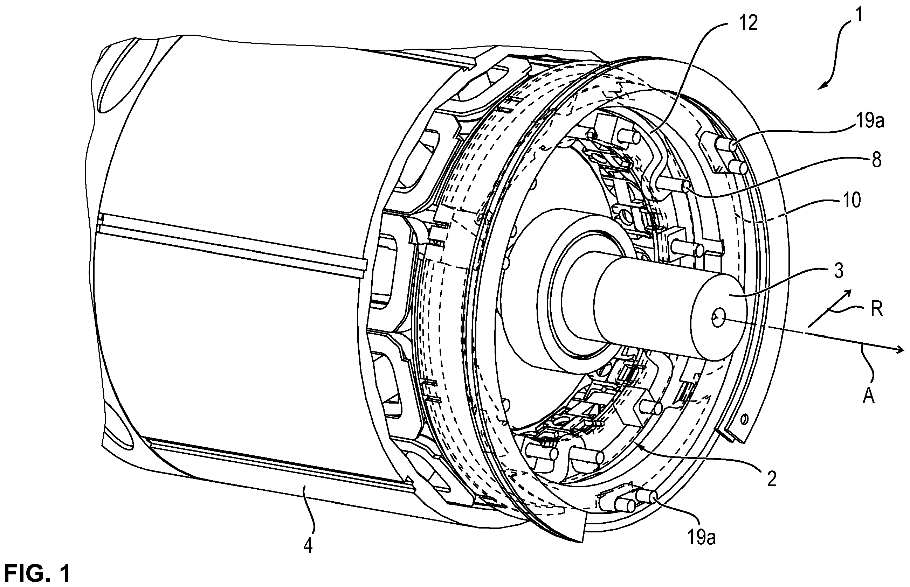

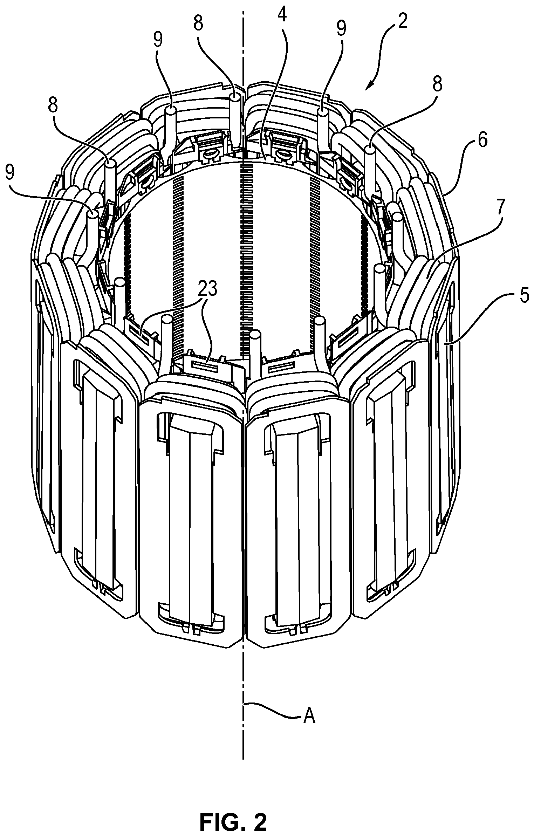

Fig. 1 zeigt einen Elektromotor 1 mit einem Stator 2 und mit einem Rotor 3 in perspektivischer Darstellung, während Fig. 2 einen Teil des Stators 2 des Elektromotors 1 ohne Joch zeigt. Der Stator 2 wirkt in üblicher Weise mit einem Rotor 3 zusammen. Dem Stator 2 ist ein Joch 4 als Blechpaket zugeordnet, dass in Fig. 1 gezeigt und in Fig. 2 entnommen ist, so dass dort das sternförmige Blechpaket des Stators 2 erkennbar ist. Die hierzu gestapelten Statorbleche bestehen üblicherweise aus weichmagnetischem Eisen.

Der Stator 2 weist unter Bildung von nicht näher bezeichneten Statornuten radial nach außen gerichtete Statorzähne 5 auf, auf die rahmenartige Wicklungsträger 6 aufgesteckt sind. Jeder der rahmenartigen Wicklungsträger 6 trägt eine Spule oder Spulenwicklung 7 als Teil der Statorwicklung. Jeweils zwei aufeinanderfolgende Spulen 7 sind durchgehend verbunden und bilden ein Spulenpaar mit den Spulen 7 in Serienschaltung. Die Spulenpaare sind jeweils über zwei Spulenenden 8, 9 kontaktierbar. Die insgesamt zwölf dargestellten Spulenenden 8, 9, nämlich sechs erste Spulenenden 8 und sechs zweite Spulenenden 9, sind zur weiteren Kontaktierung durch ein nachfolgend näher beschriebenes Verschaltungselement 10 in Richtung der Motorachse A - also axial - orientiert bzw. ausgerichtet.

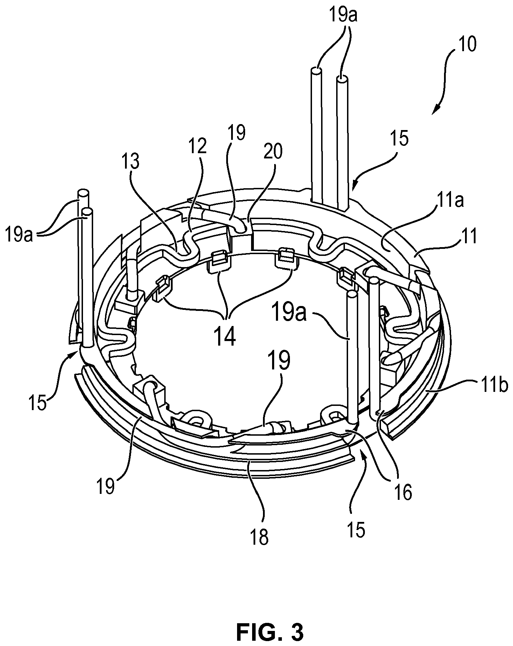

Fig. 3 zeigt die bevorzugte Ausführungsform des Verschaltungselements 10, das zur Kontaktierung und Verschaltung der Spulenenden 8, 9 dient und hierzu geringförmig gestaltet ist. Das Verschaltungselement 10 umfasst ein kreisringförmiges Rahmenteil 11 mit einem radialen Innenkragen 11a und mit einer Umfangswandung 11b.

Ein kreisförmig gebogener Kontaktring 12 liegt im Rahmenteil 11 ein und dabei zweckmäßigerweise an dessen Innenumfang an. Der Kontaktring 12 ist an exponierten Positionen speziell lokal ausgebogen, um dort U- oder halbkreisförmige Kontaktstellen oder-ösen 13 auszubilden, die sich innerhalb des Verschaltungselementes 10 radial erstrecken. Am Innenumfang des kreisringförmigen Verschaltungselements 10 verteilt angeordnete, axial orientierte Rastelemente 14 sind an das Rahmenteil 11 angeformt.

Des Weiteren sind in die Umfangswandung 11b des Rahmenteils 11 nut- oder kerbenartige Ausnehmungen 15 eingebracht, die für eine einfache Handhabbarkeit bei der Montage geeigneterweise außenumfangsseitig offen sind. Beidseitig der jeweiligen Ausnehmung 15 sind klinken-, zapfen- oder hakenmaulartige Halteelemente 16 an die Umfangswandung 11b des Rahmenteils 11 angeformt. Die Ausnehmungen 15 bilden exponierte Stellen, wie nachfolgend näher beschrieben ist.

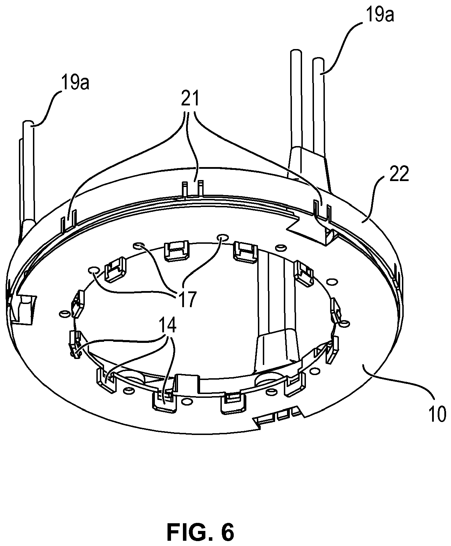

Wie aus Fig. 6 vergleichsweise deutlich ersichtlich ist, sind in den Rahmenkragen 11a des Rahmenteil 11 und somit in das Verschaltungselement 10 bodenseitige Kontaktdurchführungen 17 zur Durchführung und/oder Kontaktierung der gemäß Fig. 2 axial emporragenden Spulenenden 8 und 9 eingebracht. Die Kontaktdurchführungen oder -öffnungen 17 sind umfangsseitig verteilt angeordnet, wobei deren Verteilungsraster an die jeweiligen Umfangspositionen der Spulenenden 8 und 9 gemäß Fig. 2 angepasst ist. Ebenso können die statorseitigen Umfangspositionen der Spulenenden 8 und 9 an die korrespondierenden Durchführungspositionen der Kontaktdurchführungen 17 des Verschaltungselementes 10 angepasst sein.

Zudem sind entlang des Außenumfangs des Rahmenteils 11 in dessen Umfangswandung 11b außenumfangsseitig offen Nuten 18 vorgesehen, die auch durch die Ausbildung entsprechend verlaufender Wandungsstege in der Umfangswandung 11b hergestellt sein können. Diese azimutal verlaufenden Nuten 18 (Azimutalnuten) des Verschaltungselements 10 münden beidseitig der Ausnehmungen 15 in diese und somit in die exponierten Stellen ein.

Das Verschaltungselement 10 nimmt die in der Fig. 2 gezeigten Spulenenden 8, 9 auf, um diese zu kontaktieren und zu verschalten. Wie aus den Fig. 2 und 6 in Verbindung beispielsweise mit Fig. 1, 4 und 7 ersichtlich ist, dringen die Spulenenden 8 und 9 beim Fügen des in Fig. 6 in einer Unteransicht gezeigten Verschaltungsrings 10 mit dem in Fig. 2 gezeigten bewickelten Stator 2 in die Kontaktöffnungen 17 ein.
Gemäß dem bevorzugten Ausführungsbeispiel dringen hierbei die ersten Spulenenden 8 in jede zweite Kontaktöffnung 17 ein, während die zweiten Spulenenden 8 in die dazwischen liegenden Kontaktöffnungen 17 eindringen. Die den ersten Spulenenden 8 zugeordneten Kontaktöffnungen 17 bilden dabei eine erste Kontaktierungsgruppe, während die den zweiten Spulenenden 9 zugeordneten Kontaktöffnungen 17 eine zweite Kontaktierungsgruppe bilden, deren Kontaktöffnungen 17 mit den speziell ausgeformten oder ausgebogenen Kontaktstellen 13 des Kontaktrings 12 fluchten. Dort sind die ersten Spulenenden 8 in der Fügeposition an den Kontaktstellen 13, insbesondere aufgrund deren ösenförmigen Ausgestaltung, klemmkontaktiert und vermittels des Kontaktrings 12 zum Sternpunkt der Statorwicklung verschaltet.
Die zweiten Spulenenden 9 sind innerhalb des Verschaltungselementes 10 durch die entsprechenden Kontaktöffnungen 17 hindurch und anschließend azimutal entlang des Außenumfangs des Rahmenteils 11 geführt. Alternativ können die zweiten Spulenenden 9 in den entsprechenden Kontaktöffnungen 17 mit separaten Leiterelementen in Form von Drahtstücken oder dergleichen kontaktiert sein.
Diese Kontaktöffnungen 17 des Verschaltungselementes 10 bilden eine zweite Kontaktierungsgruppe. Eine verbesserte Führung und/oder Halterung der zweiten Spulenenden 9 wird vorteilhafterweise erreicht, indem die Kontaktöffnungen 17 der zweiten Kontaktierungsgruppe einen vergleichsweise langen Führungskanal aufweisen, der durch in Axialrichtung erhabene domartige Kontaktansätze 20 hergestellt ist. Diese Kontaktansätze 20 sind auf der dem Stator 2 gegenüber liegenden Seite des Rahmenteils 11 an dessen Innenkragen 11a im Bereich der Kontaktierungsöffnungen 17 der zweiten Kontaktierungsgruppe vorgesehen und vorteilhafterweise an diesen angeformt. Bei der Variante mit separaten Leiterelementen erfolgt innerhalb dieser Kontaktansätze oder -kanäle 20 die Kontaktierung der zweiten Spulenenden 9 mit den Leiterelementen.

Während für die ersten Spulenenden 8 somit über die Kontaktöffnungen 17 der ersten Kontaktierungsgruppe in Verbindung mit dem Kontaktring 12 und insbesondere dessen Kontaktstellen 13 mittels des Verschaltungselementes 10 quasi Klemmkontakte bereitgestellt sind, bildet das Verschaltungselement 10 für die zweiten Spulenenden 9 über die Kontaktöffnungen 17 der zweiten Kontaktierungsgruppe und insbesondere vermittels der Kontaktansätze 20 quasi Steckkontakte aus, wenn separate Leiterelemente vorgesehen sind.

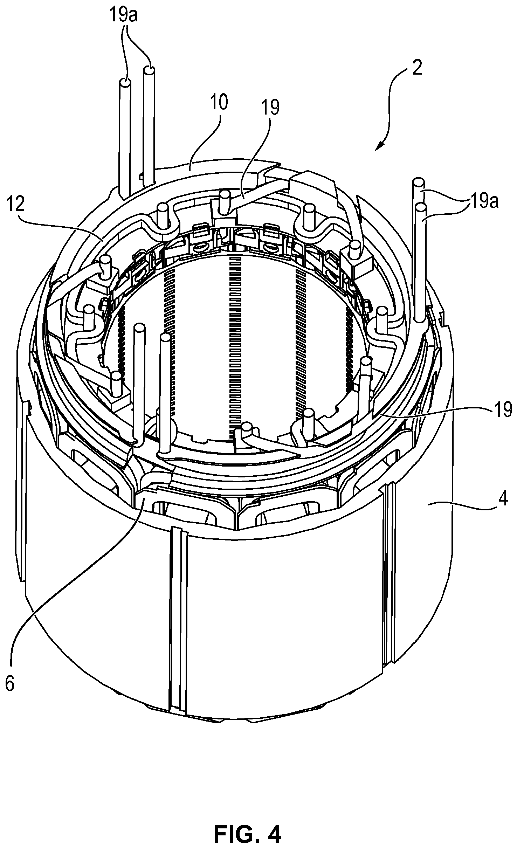

Wie aus den Figuren 3 und 4 vergleichsweise deutlich ersichtlich ist, weisen die zweiten Spulenenden 9 jeweils einen Spulenendenabschnitt 19 auf, in den Azimutalnuten 18 geführt und darin verlegt sind. Bei der Ausführung mit separaten Leiterelementen sind dies entsprechende Leiterabschnitte. Sich an diese Abschnitte 19 anschließende Anschlussenden 19a der Spulenenden 9 bzw. der Leiterelemente sind in den Ausnehmungen 15 des Verschaltungselementes 10 an den maulartigen Halteelementen 16 umgebogen, so dass sich diese Anschlussenden 19a an den durch die Ausnehmungen 15 gebildeten exponierten Stellen in Axialrichtung A erstrecken und dreiphasig Wicklungsanschlüsse bilden.

Die Spulenenden 9, d. h. an deren Spulenendenabschnitte 19 oder an den Leiterabschnitten der zusätzlichen Leiterelemente die Wicklungsanschlüsse 19a sind in den vorliegend drei Ausnehmungen bzw. exponierten Stellen 15 paarweise ausgerichtet. Insgesamt ergibt sich somit eine dreiphasige Anschlusskonfiguration aus mit jeweils zwei zweiten Spulenenden 9 kontaktierten und verschalteten Anschlüssen 19a für eine dreiphasige Bestromung der Statorwicklung.

Im Ausführungsbeispiel sind zwölf Statorzähne 5 mit jeweils einem Wicklungsträger 6 und darauf jeweils mindestens einer Spule 7 mit insgesamt zwölf Spulenenden 8, 9 vorgesehen. Das Verschaltungselement 10 ermöglicht in montagetechnisch und insbesondere verschaltungstechnisch einfacher Art und Weise die Bereitstellung einer dreiphasigen Anschlussverdrahtung des Elektromotors 1.
Das Verschaltungselement 10 bewirkt darüber hinaus eine besonders geeignete, einfach handhabbare und insbesondere raumsparende Führung der zweiten Spulenenden 9 in den azimutalen Nuten 18 entlang des Außenumfangs des Rahmenteils 11. Die Halteelemente 16 am Außenumfang der Umfassungswandung 11b des Rahmenteils 11 ermöglichen dabei eine ausreichend sichere Fixierung und Positionierung der Anschlüsse 19 der zweiten Spulenenden 9.

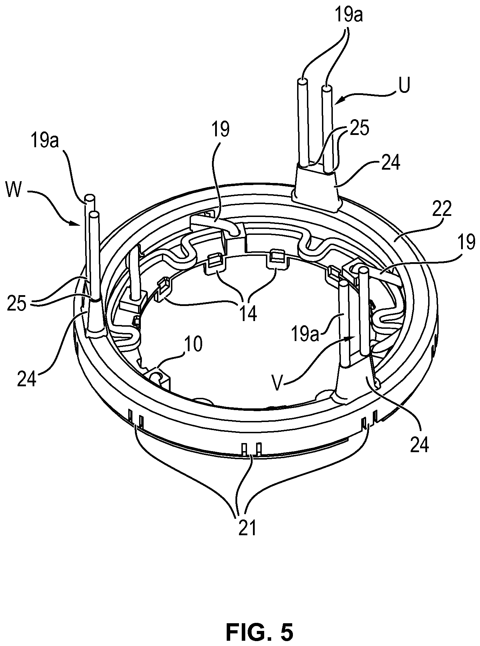

Die an das Verschaltungselement 10 angeformten Rastelemente 14 ermöglichen in einfacher und zuverlässiger Art und Weise im Zuge der Montage beim Fügen des Verschaltungselementes 10 mit dem Stator 2 eine Verrastung zwischen diesen beiden Fügeteilen 2, 10. Die Rastelemente 14 des Verschaltungselementes 10 greifen hierbei in korrespondierende Rastelemente 21 in Form von Rastösen ein, die an die Wicklungsträger 6 der Spulen 7 angeformt sind und sich in Axialrichtung A erstrecken. Da sich einerseits die Statorzähne 5 in Radialrichtung R (Fig. 1) erstrecken und die Wicklungsträger 6 hierauf aufgesteckt sind, und da sich andererseits die wicklungsträgerseitigen Rastelemente 21 in Axialrichtung A erstrecken, ist ein zuverlässiger Halt des Verschaltungselementes 10 am Stator 2 gewährleistet.
Wie insbesondere aus den Fig. 5 und 6 ersichtlich ist, weist das Verschaltungselement 10 ein Deckelelement 22 auf. Dieses ist vorzugsweise ebenfalls ringförmig und an die Kontur des Rahmenteils 11 und insbesondere an dessen Umfassungswand 11b angepasst, um dieses abzudecken und insbesondere die Azimutalnuten 18 möglichst staub- und verschmutzungsdicht abzudecken bzw. zu verschließen. Das Deckelelement 22 wird mit dem Rahmenteil 11 vorzugsweise verrastet, um diese beiden Teile 10, 22 miteinander zuverlässig zu fügen. Hierzu sind außenumfangsseitig an das haubenartige Deckelelement 22 eine Anzahl von Rastelementen 23 angeformt, die mit korrespondierenden Rastkonturen des Rahmenteils 11 zur Herstellung der Rastverbindung zusammenwirken.

An das Deckelelement 22 sind in Axialrichtung A erhabene, domartige Führungsmanschetten als Führungselemente 24 für die Anschlüsse 19a der zweiten Spulenenden 9 angeformt. Die Führungsmanschetten 24 fluchten mit den die exponierten Stellen bildenden Ausnehmungen 15 des Rahmenteils 11 des Verschaltungselementes 10. Kopfseitig sind Öffnungspaare 25 in die Führungsmanschetten 24 eingebracht, über welche die als dreiphasige Wicklungsanschlüsse dienenden Anschlüsse 19a der Spulenenden 9 herausgeführt und somit positionsgenau stabilisiert sind.

Fig. 7 zeigt den Stator 2 mit montiertem Verschaltungselement 10 inklusive dessen Deckelelement 22. Erkennbar ragen die mit den zweiten Spulenenden 9 vermittels des Verschaltungselementes 10 kontaktierten Anschlüsse 19a in Axialrichtung A über die entsprechende Stirnseite des Stators 2 exakt positioniert und sicher gehalten aus dem Verschaltungselement 10 heraus und bilden die Wicklungsanschlüsse der Statorwicklung zur Verschaltung mit einer Steuerelektronik für eine dreiphasige Bestromung des Elektromotors 1. Erkennbar ist der Stator 2 mit dem Statorjoch 4 umgeben, das mit den Freienden der Statorzähne 5, beispielsweise durch Verstemmen, zuverlässig kontaktiert ist.

Die Erfindung ist nicht auf die vorstehend beschriebene Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- 1: Elektromotor
- 2: Stator
- 3: Rotor
- 4: Joch
- 5: Statorzahn
- 6: Wicklungsträger
- 7: Spule/Spulenwicklung
- 8: erste Spulenenden
- 9: zweite Spulenenden
- 10: Verschaltungselement
- 11: Rahmenteil
- 11a: Innenkragen
- 11b: Umfangswandung
- 12: Kontaktring
- 13: Kontaktstelle
- 14: Rastelemente
- 15: Ausnehmung/exponierte Stelle
- 16: Halteelemente
- 17: Kontaktöffnung
- 18: Azimutalnut
- 19: Spulenenden-/Leiterabschnitt
- 19a: Anschlussende/Wicklungsanschluss
- 20: Ansatz
- 21: Rastelement
- 22: Deckelelement
- 23: Rastelement
- 24: Führungselement / -manschette
- 25: Öffnungspaar

- A: Axialrichtung
- R: Radialrichtung

## Patentansprüche

1. Elektromotor (1), insbesondere einer Fahrzeugkomponente, beispielsweise eines Fensterheber- oder Sitzverstellantriebs, mit einem Rotor (3) und mit einem Stator (2) mit dreiphasiger Statorwicklung mit je Phase (u,v,w) mindestens einer Spule (7) mit ersten und zweiten Spulenenden (8, 9) sowie mit einem kreisringförmig ausgebildeten, an einer Stirnseite des Stators (2) angeordneten und dort fixierten Verschaltungselement (10) mit einem ringförmigen Rahmenteil (11), in dem ein Kontaktring (12) mit Kontaktstellen (13) zur elektrisch leitenden Verbindung der ersten Spulenenden (8) unter Sternpunktbildung einliegt, **dadurch gekennzeichnet,**
- **dass** das Verschaltungselement (10) eine der Anzahl der Spulenenden (8, 9) entsprechende Anzahl von axial verlaufenden, bodenseitigen Kontaktdurchführungen (17) aufweist, die eine erste und eine zweite Kontaktierungsgruppe bilden,
- **dass** das Rahmenteil (11) des Verschaltungselements (10) eine Umfangswandung (11b) und einen daran angeformten radialen Innenkragen (11a) aufweist, wobei die Kontaktdurchführungen (17) axial verlaufend im Rahmenkragen (11a) und in der Umfangswandung (11b) außenumfangsseitig Azimutalnuten (18) vorgesehen sind und mit den speziell ausgeformten oder ausgebogenen Kontaktstellen (13) des Kontaktrings (12) fluchten,
- **dass** den Kontaktdurchführungen (17) der ersten Kontaktierungsgruppe der Kontaktring (12) mit den Kontaktstellen (13) zur elektrisch leitenden Verbindung der ersten Spulenenden (8) unter Sternpunktbildung zugeordnet ist, und
- **dass** die zweiten Spulenenden (9) durch die Kontaktdurchführungen (17) der zweiten Kontaktierungsgruppe hindurch und mit einem Spulenendenabschnitt (19) entlang des Verschaltungselements (10) in den Azimutalnuten (18) geführt sowie unter Bereitstellung eines dreiphasigen Wicklungsanschlusses (19a) an exponierten Positionen (15) axial aus dem Verschaltungselement (10) herausgeführt sind, wobei das Verschaltungselement (10) eine entsprechende Anzahl von angeformten Halteelementen (16) aufweist, welche die Wicklungsanschlüsse (19a) bzw. die Anschlussenden der Leiter- oder Spulenabschnitte an exponierten Positionen (15) axial ausgerichtet halten, sodass das kreisringförmige Verschaltungselement (10) einen Adapter bildet und für den weiteren Zusammenbau des Elektromotors (1) eine stabile Anordnung schafft.

2. Elektromotor (1) nach Anspruch 1,
**dadurch gekennzeichnet,**
**dass** die Spulenendenabschnitte (19) der zweiten Spulenenden (9) als separate Leiterelemente ausgeführt sind, die innerhalb des Verschaltungselementes (10) mit den zweiten Spulenenden (9) kontaktiert sind und die Wicklungsanschlüsse (19a) bilden.

3. Elektromotor (1) nach Anspruch 1 oder 2,
**dadurch gekennzeichnet,**
**dass** der Kontaktring (12) ösenartig ausgebogene Kontaktstellen (13) aufweist, die zur Aufnahme und Kontaktierung der ersten Spulenenden (8) mit den Kontaktdurchführungen (17) der ersten Kontaktierungsgruppe fluchten.

4. Elektromotor (1) nach einem der Ansprüche 1 bis 3,
**dadurch gekennzeichnet,**
**dass** die Wicklungsanschlüsse (19a) an den exponierten Stellen (15) klinken-, zapfen- oder hakenmaulartigen Halteelementen (16) des Verschaltungselements (10) axial gehalten sind.

5. Elektromotor (1) nach einem der Ansprüche 1 bis 4,
**dadurch gekennzeichnet,**
- **dass** das Verschaltungselement (10) eine Anzahl von Rastelementen (14) aufweist, und
- **dass** den Spulen (7) statorseitige Wicklungsrahmen (6) mit korrespondierenden Rastelementen (23) zur Herstellung einer Rastverbindung mit dem Verschaltungselement (10) zugeordnet sind.

6. Elektromotor (1) nach einem der Ansprüche 1 bis 5,
**dadurch gekennzeichnet,**
**dass** das Verschaltungselement (10) ein mit diesem fixierbares, insbesondere mit diesem verrastbares, Deckelelement (22) aufweist.

7. Elektromotor (1) nach Anspruch 6,
**dadurch gekennzeichnet,**
**dass** das Deckelelement (22) eine der Anzahl der Phasen (u, v, w) entsprechende Anzahl von domartig erhabenen Führungselementen (24) für die Wicklungsanschlüsse (19a) aufweist.

8. Elektromotor (1) nach Anspruch 7,
**dadurch gekennzeichnet,**
**dass** die Wicklungsanschlüsse (19a), insbesondere zur Anschlusskontaktierung mit einer Steuerelektronik, über die Führungselemente (24) des Deckelelementes (22) aus dem Verschaltungselement (10) axial herausgeführt sind.

9. Elektromotor (1) nach einem der Ansprüche 1 bis 8,
**dadurch gekennzeichnet,**
**dass** mittels des Verschaltungselements (10) die ersten Spulenenden (8) mit den Kontaktöffnungen (17) der ersten Kontaktierungsgruppe klemmkontaktiert sind.

## Claims

1. Electric motor (1), in particular of a vehicle component, for example a window regulator drive or seat adjustment drive, having a rotor (3) and having a stator (2) having three-phase stator winding, having at least one coil (7) per phase (u,v,w) having first and second coil ends (8, 9) and having an interconnection element (10) which is formed as a circular ring and arranged on an end face of the stator (2) and fixed there, having an annular frame part (11) in which a contact ring (12) having contact points (13) for electrically conductive connection of the first coil ends (8) is located so as to form star points,
**characterised in that**
- the interconnection element (10) has a number of axially running contact passages (17) on the bottom corresponding to the number of coil ends (8, 9), said contact passages (17) forming a first and a second contact group,
- the frame part (11) of the interconnection element (10) has a peripheral wall (11b) and a radial inner collar (11a) integrally formed thereon, wherein the contact passages (17) running axially in the frame collar (11a) and in the peripheral wall (11b) are provided azimuthal grooves (18) on the outer peripheral side and are aligned with the specially designed or bent contact points (13) of the contact ring (12),
- the contact ring (12) having the contact points (13) is assigned to the contact passages (17) of the first contact group for the electrically conductive connection of the first coil ends (8) so as to form star points, and
- the second coil ends (9) are guided through the contact passages (17) of the second contact group and with a coil end portion (19) along the interconnection element (10) in the azimuthal grooves (18), and are axially passed out of the interconnection element (10) to supply a three phase winding terminal (19a) in exposed positions (15), wherein the interconnection element (10) has a corresponding number of integrally formed holding elements (16) which hold the winding terminals (19a) or the terminal ends of the conductor portions or coil portions axially orientated in exposed positions (15), such that the interconnection element (10) which is formed as a circular ring forms an adaptor and creates a stable arrangement for the further assembly of the electric motor (1).

2. Electric motor (1) according to claim 1,
**characterised in that**
the coil end portions (19) of the second coil ends (9) are designed as separate conductor elements which are in contact with the second coil ends (9) within the interconnection element (10) and form the winding terminals (19a).

3. Electric motor (1) according to claim 1 or 2,
**characterised in that**
the contact ring (12) has contact points (13) which are bent in an eye-like manner and are aligned with the first contact passages (17) of the first contact group for receiving and contacting the first coil ends (8).

4. Electric motor (1) according to one of claims 1 to 3,
**characterised in that**,
the winding terminals (19a) at the exposed points (15) are axially held by means of catch, pin or hook aperture holding elements (16) of the interconnection element (10).

5. Electric motor (1) according to one of claims 1 to 4,
**characterised in that**
- the interconnection element (10) has a number of latch elements (14), and
- stator side winding terminals (6) having corresponding latch elements (23) for producing a latch connection to the interconnection element (10) are assigned to the coils (7).

6. Electric motor (1) according to one of claims 1 to 5,
**characterised in that**
the interconnection element (10) has a cover element (22) which can be fixed to it, in particular can be latched to it.

7. Electric motor (1) according to claim 6,
**characterised in that**
the cover element (22) has a number of dome-like elevated guide elements (24) for the winding terminals (19a), said number corresponding to the number of phases (u, v, w).

8. Electric motor (1) according to claim 7,
**characterised in that**
the winding terminals (19a) are axially passed out of the interconnection element (10) via the guide elements (24) of the cover element (22), in particular for contact connection to an electronic control system.

9. Electric motor (1) according to one of claims 1 to 8,
**characterised in that**
the first coil ends (8) are contact-clamped to the contact openings (17) of the first contact group by means of the interconnection element (10).

## Revendications

1. Moteur électrique (1), notamment d'un composant de véhicule, par exemple d'un entraînement pour lève-vitre ou pour réglage de siège, comprenant un rotor (3) et un stator (2) pourvu d'un enroulement statorique triphasé comportant, pour chaque phase (u, v, w), au moins un bobinage (7) présentant une première et une deuxième extrémité de bobinage (8, 9) ainsi qu'un élément de câblage (10) circulaire disposé et fixé sur une face frontale du stator (2), lequel élément de câblage présente une partie annulaire formant cadre (11) dans laquelle est inséré un anneau de contact (12) présentant des points de contact (13) pour relier électriquement selon un montage en étoile les premières extrémités de bobinage (8) **caractérisé**
- **en ce que** l'élément de câblage (10) présente un nombre de passages de contact (17) s'étendant axialement du côté du fond correspondant au nombre des extrémités de bobinage (8, 9), lesquelles passages de contact formant un premier et un deuxième groupe de contacteurs,
- **en ce que** la partie formant cadre (11) de l'élément de câblage (10) présente une paroi circonférentielle (11b) et, formée dessus, une collerette interne (11a) radiale, les passages de contact (17) étant prévus en s'étendant axialement dans la collerette de cadre (11a) et des rainures azimutales (18) étant prévues dans la paroi circonférentielle (11b) du côté circonférentiel externe, et les passages de contact étant alignés avec les points de contact (13) cintrés ou formés spécialement,
- **en ce que** les passages de contact (17) du premier grouppe de contacteurs de l'anneau de contact (12) sont associés aux points de contact (13) pour relier électriquement selon un montage en étoile les premières extrémités de bobinage (8), et
- **en ce que** les deuxièmes extrémités de bobinage (9) ressortent axialement de l'élément de câblage (10) en passant à travers les passages de contact (17) du deuxième groupe de contacteurs et en étant guidées avec une section d'extrémité de bobinage (19) le long de l'élément de câblage (10) dans les rainures azimutales (18) ainsi qu'en formant une connexion de bobinage (19a) triphasé à des emplacements exposés (15), l'élément de câblage (10) présentant un nombre correspondant d'élément de retenue (16) formés, lesquels retiennent dirigés axialement les connexions de bobinage (19a) ou les extrémités de connexion des sections de conduction ou de bobinage sur les emplacements exposés (15) de telle sorte que l'élément de câblage circulaire (10) forme un adaptateur et constitue un agencement solide pour la suite du montage du moteur électrique (1).

2. Moteur électrique (1) selon la revendication 1, **caractérisé en ce que** les sections d'extrémité de bobinage (19) des deuxièmes extrémités de bobinage (9) sont formées sous la forme d'éléments conducteurs séparés qui sont mis en contact dans l'élément de câblage (10) avec les deuxièmes extrémités de bobinage (9) et qui forment les connexions de bobinage (19a).

3. Moteur électrique (1) selon la revendication 1 ou 2, **caractérisé en ce que** l'anneau de contact (12) présente des points de contact (13) cintrés en forme d'oeillet qui sont alignés avec les passages de contact (17) du premier groupe de contacteurs pour recevoir et mettre en contact les premières extrémités de bobinage (8).

4. Moteur électrique (1) selon l'une des revendications 1 à 3, **caractérisé en ce que** les connexions de bobinage (19a) sont retenues axialement dans les emplacements exposés (15) par le biais d'éléments de retenue (16) de l'élément de câblage (10) de type cliquet, tenon ou bec de crochet.

5. Moteur électrique (1) selon l'une des revendications 1 à 4, **caractérisé**
- **en ce que** l'élément de câblage (10) présente un nombre d'éléments d'encliquetage (14), et
- **en ce que** des cadres de bobinage (6) situés du côté stator ayant des éléments d'encliquetage (23) correspondant sont associés aux bobinages (7) pour former une liaison par encliquetage avec l'élément de câblage (10).

6. Moteur électrique (1) selon l'une des revendications 1 à 5, **caractérisé en ce que** l'élément de câblage (10) présente un élément couvercle (22) pouvant être fixé à celui-ci, en particulier pouvant s'encliqueter avec celui-ci.

7. Moteur électrique (1) selon la revendication 6, **caractérisé en ce que** l'élément couvercle (22) présente un nombre d'éléments de guidage (24) correspondant au nombre de phases (u, v, w) et saillant en forme de dôme pour les connexions de bobinage (19a).

8. Moteur électrique (1) selon la revendication 7, **caractérisé en ce que** les connexions de bobinage (19a) sont guidées axialement hors de l'élément de câblage (10) en passant dans les éléments de guidage (24) de l'élément couvercle (22), en particulier pour le raccordement à une électronique de contrôle.

9. Moteur électrique (1) selon l'une des revendications 1 à 8, **caractérisé en ce que** les premières extrémités de bobinage (8) sont mises en contact pinçant avec les ouvertures de contact (17) du premier groupe de contacteurs au moyen de l'élément de câblage (10).
